# EUROPÄISCHE PATENTSCHRIFT

(11) **EP 3 241 000 B1**
(45) Veröffentlichungstag und Bekanntmachung des Hinweises auf die Patenterteilung: **01.01.2020**
(21) Anmeldenummer: 15795199.7
(22) Anmeldetag: 18.11.2015
(51) Int. Cl.: G01F 1/84, G01F 25/00

(54) **CORIOLIS-MASSEDURCHFUSSMESSGERÄT MIT VIER GEBOGENEN MESSROHREN**
CORIOLIS FLOW METER WITH FOUR BENT MEASUREMENT CONDUITS
DÉBITMÈTRE À EFFET CORIOLIS AVEC QUATRE CONDUITS DE MESURE ARQUÉS

(30) Priorität: 31.12.2014 DE 102014019399; 31.03.2015 DE 102015104931
(43) Veröffentlichungstag der Anmeldung: 08.11.2017
(73) Patentinhaber: Endress+Hauser Flowtec AG, 4153 Reinach (CH)
(72) Erfinder: ZHU, Hao, 85354 Freising (DE); RIEDER, Alfred, 84032 Landshut (DE)
(74) Vertreter: Andres, Angelika Maria
(86) Internationale Anmeldenummer: PCT/EP2015/076931
(87) Internationale Veröffentlichungsnummer: WO 2016/107694

(56) Entgegenhaltungen:
- EP-A1- 2 485 020
- WO-A1-2004/017027
- DE-A1-102004 035 971
- DE-A1-102010 039 627

## Beschreibung

Die vorliegende Erfindung betrifft ein Coriolis Massedurchflussmessgerät (im Folgenden CMD) mit zwei in der Ruhelage gebogenen Messrohrpaaren. Derartige CMD sind bekannt aus den Offenlegungsschriften DE 10 2009 055 069 A1, DE 10 2010 039 627 A1, WO 2012/089431 A1 und DE 10 2011 010 178 A1. Die Veröffentlichung WO 2004/017027 A1 offenbart ein Durchflussmessgerät, bei dem zwei Durchflussmesser mit jeweils einem Messrohrpaar in einem Gehäuse integriert sind, um die Differenz zwischen zwei Durchflussmengen zu bilanzieren. Zum Vermeiden von Übersprechen schwingen die beiden Durchflussmesser auf unterschiedlichen Eigenfrequenzen. Bei den Geräten der Offenlegungsschriften DE 10 2009 055 069 A1, DE 10 2010 039 627 A1, WO 2012/089431 A1 und DE 10 2011 010 178 A1 werden die Messrohre der CMD mechanisch gekoppelt angeregt. Dies ist konstruktiv sehr aufwändig und kann zu großen mechanischen Spannungen, insbesondere thermomechanischen Spannungen in den Messrohren führen. Es ist daher die Aufgabe der vorliegenden Erfindung, hier Abhilfe zu schaffen.

Die Aufgabe wird erfindungsgemäß gelöst durch das CMD gemäß dem unabhängigen Patentanspruch 1.

Das erfindungsgemäße Coriolis-Massedurchflussmessgerät (im Folgenden CMD) umfasst vier Messrohre; mindestens eine erste Aktuatoranordnung und eine zweite Aktuatoranordnung; mindestens eine erste Sensoranordnung und eine zweite Sensoranordnung, wobei alle vier Messrohre jeweils einlassseitig und auslassseitig mit einem Sammler (3) strömungstechnisch zusammengefasst sind,
wobei das erste Messrohr und das zweite Messrohr einlassseitig und auslassseitig mit jeweils mindestens einer starren Knotenplatte, die beabstandet zum Sammler angeordnet ist, miteinander verbunden sind, um einen ersten Oszillator zu bilden, wobei die erste Aktuatoranordnung dazu eingerichtet ist, einen Biegeschwingungsnutzmode zwischen den beiden Messrohren des ersten Oszillators anzuregen,
wobei das dritte Messrohr und das vierte Messrohr einlassseitig und auslassseitig mit jeweils mindestens einer starren Knotenplatte, die beabstandet zum Sammler, angeordnet ist miteinander verbunden sind, um einen zweiten Oszillator zu bilden, wobei die zweite Aktuatoranordnung dazu eingerichtet ist, einen Biegeschwingungsnutzmode zwischen den beiden Messrohren des zweiten Oszillators anzuregen,
wobei der erste Oszillator einen Biegeschwingungsnutzmode mit einer ersten Nutzmodeeigenfrequenz (f₁₁) aufweist,
wobei der zweite Oszillator einen Biegeschwingungsnutzmode mit einer zweiten Nutzmodeeigenfrequenz (f₁₂) aufweist,
wobei die erste Sensoranordnung dazu eingerichtet ist, Schwingungen des ersten Oszillators zu erfassen, und
wobei die zweite Sensoranordnung dazu eingerichtet ist, Schwingungen des zweiten Oszillators zu erfassen,
wobei das Coriolis-Massedurchflussmessgerät weiterhin eine Betriebsschaltung zum Treiben der Aktuatoranordnungen und zum Erfassen der Signale der Sensoranordnungen umfasst,
wobei der erste Oszillator und der zweite Oszillator mechanisch unabhängig voneinander anzuregen sind,
wobei die Nutzmodeeigenfrequenz des zweiten Oszillators größer ist, als die Nutzmodeeigenfrequenz des ersten Oszillators,
wobei der Betrag der Differenz der Nutzmodeeigenfrequenzen der beiden Oszillatoren (|f₁₁ - f₁₂|) mindestens 0,1-Fache, beispielsweise mindestens das 0,2-Fache und insbesondere mindestens das 0,4-Fache der niedrigeren der beiden Nutzmodeeigenfrequenzen beträgt,
wobei die Betriebsschaltung dazu eingerichtet ist, die Aktuatoranordnungen so zu treiben, dass die Oszillatoren jeweils mit ihrer aktuellen Nutzmodeeigenfrequenz angeregt werden, wobei aufgrund der hohen Güte der Oszillatoren jeder Oszillator praktisch nur mit seiner Nutzmodeeigenfrequenz angeregt wird,
wobei die Messrohre jeweils eine Rohrmittelachse aufweisen, wobei einlassseitige und auslassseitige Schnittpunkte der Rohrmittelachsen der Messrohre eines Oszillators mit den Stirnflächen der Messrohre jeweils eine Basisebene des Oszillators definieren, wobei die Messrohre jeweils eines Oszillators eine Länge (I) aufweisen, wobei die Rohrmittelachsen der Messrohre des ersten Oszillators - bezogen auf die Basisebene des ersten Oszillators - bei der halben Rohrlänge (I/2) der Basisebene des zweiten Oszillators abgewandt sind, und wobei die Rohrmittelachsen der Messrohre des zweiten Oszillators - bezogen auf die Basisebene des zweiten Oszillators - bei der halben Rohrlänge (I/2) den Messrohren des ersten Oszillators zugewandt sind,
wobei der Strömungswiderstand in den Messrohren des zweiten Oszillators geringer ist als der Strömungswiderstand in den Messrohren des ersten Oszillators.

Beispielhaft verlaufen die Messrohre des ersten Oszillators symmetrisch zu einer ersten Spiegelebene, wobei die Messrohre des zweiten Oszillators ebenfalls symmetrisch zu der ersten Spiegelebene verlaufen, die zwischen den Messrohren des ersten Oszillators und zwischen den Messrohren des zweiten Oszillators verläuft.

Beispielhaft verlaufen die Messrohre des ersten Oszillators symmetrisch zu einer zweiten Spiegelebene, die senkrecht zur ersten Spiegelebene verläuft, und die Messrohre des ersten Oszillators schneidet, wobei die Messrohre des zweiten Oszillators ebenfalls symmetrisch zu der zweiten Spiegelebene verlaufen, und von der zweiten Spiegelebene geschnitten werden.

In einer Weiterbildung der Erfindung ist die Betriebsschaltung dazu eingerichtet, die Aktuatoranordnungen so zu treiben, dass die Biegeschwingungsnutzmoden des ersten bzw. zweiten Oszillators gleichzeitig angeregt werden.

In einer Weiterbildung der Erfindung sind der erste und der zweite Oszillator dazu eingerichtet, jeweils den Biegeschwingungsnutzmoden überlagerte durch Corioliskräfte bedingte Auslenkungen (im folgenden "Coriolisauslenkungen") aufzuweisen, wenn die Messrohre von einem Massestrom durchsetzt sind, wobei die erste Sensoranordnung und die zweite Sensoranordnung jeweils mindestens zwei Sensorelemente aufweisen, um eine Phasenverschiebung zwischen den jeweiligen Coriolisauslenkungen und dem zugehörigen Biegeschwingungsnutzmode zu erfassen.

In einer Weiterbildung der Erfindung ist die Betriebsschaltung dazu eingerichtet, in Abhängigkeit von der Phasenverschiebung der jeweiligen Coriolisauslenkung einen ersten Massedurchfluss (dm/dt_{_1}) durch die Messrohre des ersten Oszillators und einen zweiten Massedurchfluss (dm/dt_{_2}) durch die Messrohre des zweiten Oszillators zu ermitteln, und die Summe des ersten Massedurchflusses (dm/dt_{_1}) und des zweiten Massedurchflusses (dm/dt_{_2}) als Gesamtmassedurchfluss (dm/dt) auszugeben (dm/dt = dm/dt_{_1} + dm/dt_{_2}).

Beispielhaft sind die einlassseitig und auslassseitig vorgesehenen Sammler derart stabil ausgestaltet, dass sie die Funktionalität einer Knotenplatte erfüllen.

In einer Weiterbildung umfasst das CMD ein Trägerrohr welches den einlassseitigen Sammler und den auslassseitigen Sammler starr mit einander verbindet.

In einer Weiterbildung der Erfindung der Erfindung liegen das erste Messrohr und das dritte Messrohr in einer gemeinsamen ersten Ebene, und das zweite Messrohr und das vierte Messrohr liegen in einer gemeinsamen zweiten Ebene, wobei die erste Ebene und die zweite Ebene parallel zueinander verlaufen.

Die gemeinsame erste Ebene und die zweite gemeinsame Ebene sind insbesondere die Ebenen in denen die Messrohrachsen der in ihnen liegenden Messrohre verlaufen.

Die gemeinsame erste Ebene und die zweite gemeinsame Ebene verlaufen insbesodere parallel zu der weiter oben definierten ersten Spiegelebene.

Zum Erzielen der unterschiedlichen Nutzmodeeigenfrequenzen können sich die Oszillatoren in mindestens einer der folgenden Eigenschaften unterscheiden:
- Wandstärke der Messrohre
- Schwingfähige Länge der Messrohre
- Innendurchmesser der Messrohre
- Außendurchmesser der Messrohre
- Rohrmaterial
- Form der Knotenplatten
- Position der Knotenplatten
- Zusatzmassen an den Messrohren,
wobei derzeit die schwingfähige Länge und/oder die Position der Knotenplatten und/oder die Form der Knotenplatten als unterschiedliche Eigenschaften bevorzugt sind.

Die Erfindung wird nun anhand der in den Zeichnungen dargestellten Ausführungsbeispiele näher erläutert. Es zeigt:
Fig. 1a: eine schematische Frontansicht eines ersten Ausführungsbeispiels eines erfindungsgemäßen CMD;
Fig. 1b: eine schematische Seitenansicht des ersten Ausführungsbeispiels eines erfindungsgemäßen CMD ohne Trägerrohr;
Fig. 1c: eine räumliche Darstellung des ersten Ausführungsbeispiels eines erfindungsgemäßen CMD ohne Trägerrohr;
Fig. 1d: eine räumliche Darstellung des ersten Ausführungsbeispiels eines erfindungsgemäßen CMD mit montiertem Trägerrohr; und
Fig. 2: ein Koordinatensystem zur Beschreibung einiger Eigenschaften des erfindungsgemäßen CMD;

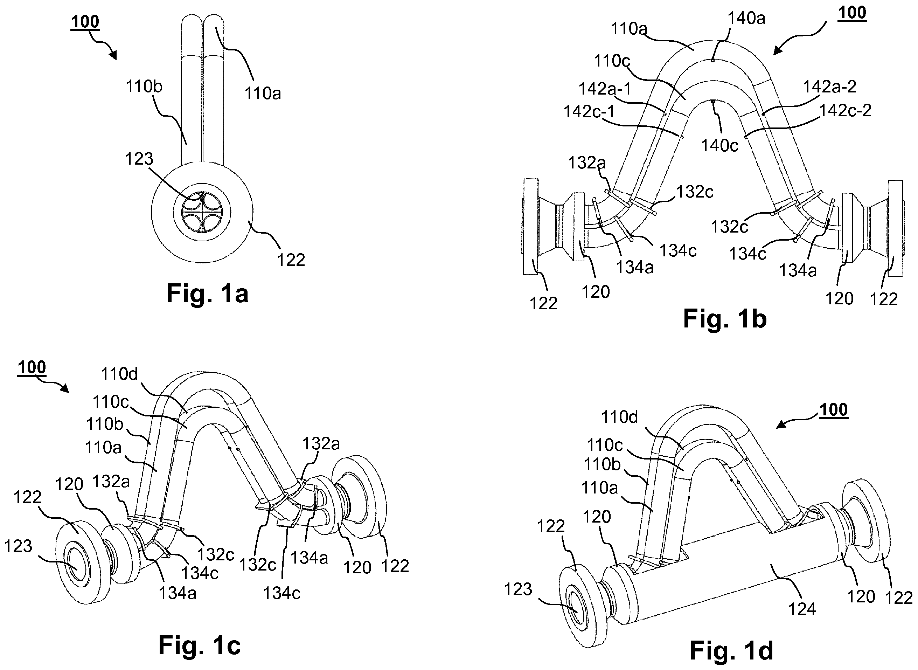

Das in Fign 1a bis 1d dargestellte erste Ausführungsbeispiel eines erfindungsgemäßen CMD 100 umfasst vier gebogene Messrohre 110a, 110b, 110c, 110d. Die Messrohre 110a, 110b, 110c, 110d erstrecken sich zwischen einem einlassseitigen Sammler 120 und einem auslassseitigen Sammler 120, und sind mit diesen fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen auf, durch welche die Messrohre 110a, 110b, 110c, 110d von den Sammlern 120 aus dem Trägerrohr 124 heraus und wieder zurück geführt sind.

Die Sammler 120 weisen endständig jeweils einen Flansch 122 auf, mittels dessen das CMD in einer Rohrleitung zu installieren ist. Durch zentrale Öffnungen 123 in den Flanschen 122 ist ein Massestrom durch das CMD 100, insbesondere dessen Rohrleitungen 110a, 110b, 110c, 110d zu führen, um den Massestrom zu messen.

Ein erstes Messrohr 110a und ein zweites Messrohr 110b sind einlassseitig und auslassseitig jeweils mit zwei Knotenplatten 132a, 134a verbunden, wobei durch die Position der beiden inneren der Knotenplatten 132a, also durch jene, welche einlassseitig bzw. auslassseitig jeweils am weitesten vom entsprechenden Sammler 120 entfernt sind, eine Schwingungslänge eines durch das erste Messrohr 110a, und das zweite Messrohr 110b gebildeten ersten Oszillators festgelegt ist. Diese freie Schwingungslänge hat großen Einfluss auf einen so genannten Biegeschwingungsnutzmode des ersten Oszillators, insbesondere auf dessen Eigenfrequenz, mit welcher der erste Oszillator anzuregen ist.

Ein drittes Messrohr 110c und ein viertes Messrohr 110d sind einlassseitig und auslassseitig jeweils mit zwei Knotenplatten 132c, 134c verbunden, wobei durch die Position der beiden inneren der Knotenplatten 132c, also durch jene, welche einlassseitig bzw. auslassseitig jeweils am weitesten vom entsprechenden Sammler 120 entfernt sind, eine Schwingungslänge eines durch das dritte Messrohr 110c und das vierte Messrohr 110d gebildeten zweiten Oszillators festgelegt ist. Diese freie Schwingungslänge hat großen Einfluss auf einen so genannten Biegeschwingungsnutzmode des zweiten Oszillators, insbesondere auf dessen Eigenfrequenz, mit welcher der zweite Oszillator anzuregen ist.

Sämtliche äußeren Knotenplatten 134a, 134c, die jeweils zwischen den inneren Knotenplatten 132a, 132c und den Sammlern 120 angeordnet sind, dienen insbesondere dazu, weitere Schwingungsknoten zu definieren, um einerseits die mechanischen Maximalspannungen an den schwingenden Messrohren zu reduzieren, und andererseits das Auskoppeln von Schwingungsenergie in eine Rohrleitung, in welcher das CMD montiert ist, bzw. das Einkoppeln von Störschwingungen aus der Rohrleitung zu minimieren.

Die Knotenplatten 132a, 132b, 134a, 134b definieren Schwingungsknoten für die Messrohre. Zwischen den inneren Kopplern bzw. Knotenplatten 132a, 132b können die Messrohre 110a, 110b frei schwingen, so dass durch die Position der inneren Koppler bzw. Knotenplatten die Schwingungseigenschaften des durch die Messrohre 110a, 110b gebildeten Oszillators, insbesondere Eigenfrequenzen von Schwingungsmoden des Oszillators wesentlich mitbestimmt werden.

Die freie Schwingungslänge der Messrohre 110a, 110b des ersten Oszillators ist wesentlich größer als die freie Schwingungslänge der Messrohre 110c, 110d des zweiten Oszillators, wobei die Messrohre 110a, 110b des ersten Oszillators in einem höheren Bogen geführt sind, als die Messrohre 110c, 110d des zweiten Oszillators. Dies führt beispielsweise dazu, dass bei dem dargestellten CMD, welches Messrohre mit einem Außendurchmesser von 3 Zoll , also etwa 76 mm und einer Wandstärke von 3,6 mm aufweist, unter Annahme der Befüllung der Messrohre mit einem Medium mit einer Dichte von Wasser der erste Oszillator einen Biegeschwingungsnutzmode mit einer Eigenfrequenz von etwa 110 Hz aufweist, während die Eigenfrequenz des Biegeschwingungsnutzmodes des zweiten Oszillators etwa 160 Hz beträgt.

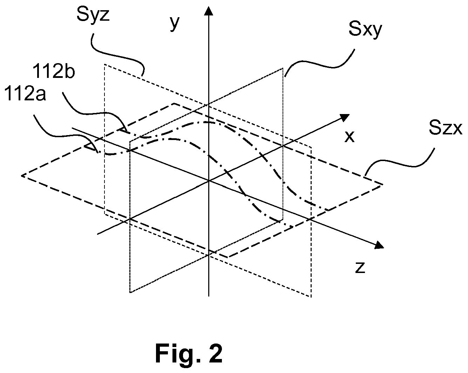

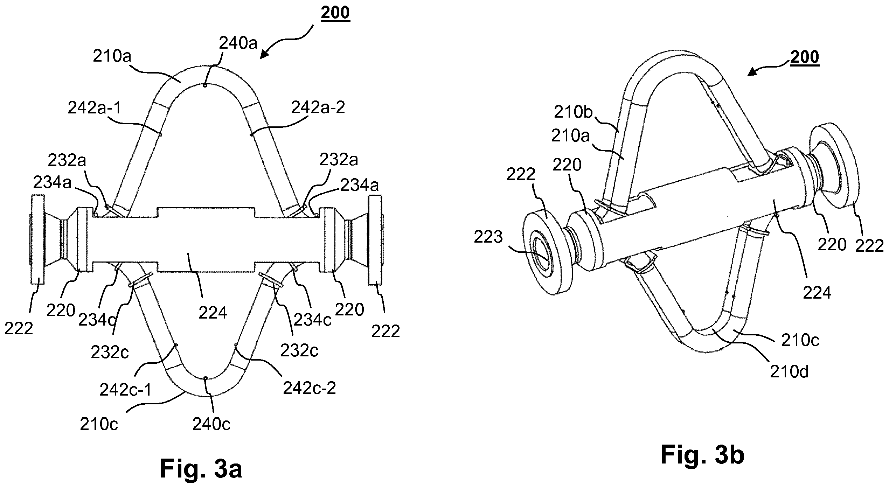

Bevor die Funktionsweise des erfindungsgemäßen CMD 100 weiter erläutert wird, sollen kurz anhand von Fig. 2 einige Symmetrieeigenschaften des erfindungsgemäßen CMD erläutert werden. In Fig. 2 sind Messrohrmittelachsen 112a, 112b des ersten Messrohrs und des zweiten Messrohrs dargestellt, welche den ersten Oszillator bilden. Die Messrohrmittelachsen 112a, 112b verlaufen symmetrisch zu einer ersten Spiegelebene Syz, welche zwischen den Messrohren verläuft. Die Messrohrmittelachsen verlaufen weiterhin symmetrisch zu einer zweiten Spiegelebene Sxy, welche senkrecht zur ersten Spiegelebene Syz verläuft.

Die Messrohrachsen 112a, 112b verlaufen vorzugsweise in Ebenen, die parallel zur ersten Spiegelebene verlaufen.

Bezüglich einer dritte Ebene Szx, welche senkrecht zur ersten Spiegelebene und zur zweiten Spiegelebene verläuft, und in welcher die Messrohrachsen 112a, 112b in den Sammlern verlaufen ist keine Symmetrie der Messrohre gegeben.

Die obigen Ausführungen gelten entsprechend für die Messrohrachsen des dritten und vierten Messrohrs.

Vorzugsweise verlaufen die Achsen des ersten Messrohrs und des dritten Messrohrs in einer ersten Ebene sowie die Messrohrachsen des zweiten und vierten Messrohrs in einer zweiten Ebene, die jeweils parallel zur ersten Spiegelebene verlaufen.

Die Schnittlinie zwischen der ersten Spiegelebene Syz und der dritten Ebene definiert eine Z-Achse eines Koordinatensystems des CMD. Die Schnittlinie zwischen der zweiten Spiegelebene Sxy und der dritten Ebene Szx definiert eine X-Achse des Koordinatensystems, und die Schnittlinie zwischen ersten Spiegelebene Syz und der zweiten Spiegelebene definiert die Y-Achse des Koordinatensystems. Mit den solchermaßen definierten Koordinaten wenden wir uns wieder Fign.1a bis 1d zu.

Zum Anregen von Biegeschwingungen der Messrohre in X-Richtung sind - bezogen auf die Längsrichtung bzw. die Z-Achse in der Mitte des CMD 100 - zwischen dem ersten Messrohr 110a und dem zweiten Messrohr 110b des ersten Oszillators eine erste Erregeranordnung 140a und zwischen dem dritten Messrohr 110c und dem vierten Messrohr 110d des zweiten Oszillators eine zweite Erregeranordnung 140c vorgesehen, beispielsweise jeweils eine induktive Erregeranordnung, die beispielsweise eine Tauchspule an einem Messrohr und einen Tauchkörper am gegenüberliegenden Messrohr umfasst. Zum Erfassen der Schwingungen der Messrohrpaare der Oszillatoren sind in Längsrichtung symmetrisch zu den Erregeranordnungen 140a, 140c jeweils eine erste Sensoranordnung 142a-1, 142c-1 und eine zweite Sensoranordnung 142a-2, 142c-2 vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden. (Im Sinne der Übersichtlichkeit wurden die Positionen der Erregeranordnung und der Sensoranordnungen lediglich in Fig. 1b dargestellt und mit Bezugszeichen versehen).

Die Oszillatoren sind jeweils mit ihrer aktuellen Eigenfrequenz anzuregen, wobei hierzu entweder die Erregeranordnungen jeweils von einer unabhängigen Treiberschaltung mit dem Signal der jeweiligen Eigenfrequenz angetrieben werden können, oder wobei die Erregeranordnungen in Reihe geschaltet und mit einem überlagerten Signal der Eigenfrequenzen beider Oszillatoren beaufschlagt werden können. Aufgrund der hohen Güte der Oszillatoren wird jeder Oszillator praktisch nur mit seiner Eigenfrequenz angeregt.

Die Oszillatoren sind jeweils mit ihrer aktuellen Eigenfrequenz anzuregen, wobei hierzu entweder die Erregeranordnungen jeweils von einer unabhängigen Treiberschaltung mit dem Signal der jeweiligen Eigenfrequenz angetrieben werden können, oder wobei die Erregeranordnungen in Reihe geschaltet und mit einem überlagerten Signal der Eigenfrequenzen beider Oszillatoren beaufschlagt werden können. Aufgrund der hohen Güte der Oszillatoren wird jeder Oszillator praktisch nur mit seiner Eigenfrequenz angeregt.

Die mechanisch unabhängige Anregung der Oszillatoren des erfindungsgemäßen CMD ermöglicht gegenüber den Eingangs dargestellten CMD nach dem Stand der Technik mit mechanisch gekoppelten Anregungen eine erhebliche Reduktion von thermo-mechanischen und schwingungsmechanischen Spannungen, die auf die Komponenten der Oszillatoren, insbesondere die Messrohre wirken. Da die versteifenden Komponenten des erfindungsgemäßen CMD damit letztendlich weniger Zwangskräfte zum Unterdrücken von Asymmetrien aufgrund von Toleranzen aufbringen müssen, können diese versteifenden Komponenten leichter und materialsparender ausgeführt werden.

Die deutliche Frequenztrennung zwischen den beiden Oszillatoren ermöglicht die Minimierung von gegenseitigen Störeinflüssen.

Weiterhin ermöglicht der Verzicht auf Symmetrie zwischen den Oszillatoren, insbesondere der Verzicht auf einen symmetrischen Strömungswiderstand, die Reduzierung des Strömungswiderstands in den Messrohren des höherfrequenten Oszillators. Damit ist der Gesamtströmungswiderstand des CMD gegenüber symmetrischen CMD mit vier Messrohren reduziert.

## Patentansprüche

1. Coriolis-Massedurchflussmessgerät (100) mit vier, insbesondere gebogenenen, Messrohren (110a, 110b, 110c, 110d), mindestens einer ersten Aktuatoranordnung und einer zweiten Aktuatoranordnung, mindestens einer ersten Sensoranordnung und einer zweiten Sensoranordnung, wobei alle vier Messrohre (110a, 110b, 110c, 110d) jeweils einlassseitig und auslassseitig mit einem Sammler (120) strömungstechnisch zusammengefasst sind,
wobei das erste Messrohr und das zweite Messrohr einlassseitig und auslassseitig mit jeweils mindestens einer starren Knotenplatte, die beabstandet zum Sammler angeordnet ist, miteinander verbunden sind, um einen ersten Oszillator zu bilden, wobei die erste Aktuatoranordnung dazu eingerichtet ist, einen Biegeschwingungsnutzmode zwischen den beiden Messrohren des ersten Oszillators anzuregen,
wobei das dritte Messrohr und das vierte Messrohr einlassseitig und auslassseitig mit jeweils mindestens einer starren Knotenplatte, die beabstandet zum Sammler, angeordnet ist miteinander verbunden sind, um einen zweiten Oszillator zu bilden, wobei die zweite Aktuatoranordnung dazu eingerichtet ist, einen Biegeschwingungsnutzmode zwischen den beiden Messrohren des zweiten Oszillators anzuregen,
wobei die erste Sensoranordnung dazu eingerichtet ist, Schwingungen des ersten Oszillators zu erfassen, und
wobei die zweite Sensoranordnung dazu eingerichtet ist, Schwingungen des zweiten Oszillators zu erfassen,
wobei das Coriolis-Massedurchflussmessgerät weiterhin eine Betriebsschaltung zum Treiben der Aktuatoranordnungen und zum Erfassen der Signale der Sensoranordnungen umfasst, **dadurch gekennzeichnet, dass** der erste Oszillator einen Biegeschwingungsnutzmode mit einer ersten Nutzmodeeigenfrequenz (f₁₁) aufweist,
und dass der zweite Oszillator einen Biegeschwingungsnutzmode mit einer zweiten Nutzmodeeigenfrequenz (f₁₂) aufweist,
wobei der erste Oszillator und der zweite Oszillator mechanisch unabhängig voneinander anzuregen sind,
wobei die Nutzmodeeigenfrequenz des zweiten Oszillators größer ist, als die Nutzmodeeigenfrequenz des ersten Oszillators,
wobei der Betrag der Differenz der Nutzmodeeigenfrequenzen der beiden Oszillatoren (|f₁₁ - f₁₂|) mindestens 0,1-Fache der Nutzmodeeigenfrequenz des ersten Oszillators beträgt,
die Betriebsschaltung dazu eingerichtet ist, die Aktuatoranordnungen so zu treiben, dass die Oszillatoren jeweils mit ihrer aktuellen Nutzmodeeigenfrequenz angeregt werden, wobei aufgrund der hohen Güte der Oszillatoren jeder Oszillator praktisch nur mit seiner Nutzmodeeigenfrequenz angeregt wird,
wobei die Messrohre jeweils eine Rohrmittelachse aufweisen, wobei einlassseitige und auslassseitige Schnittpunkte der Rohrmittelachsen der Messrohre eines Oszillators mit den Stirnflächen der Messrohre jeweils eine Basisebene des Oszillators definieren, wobei die Messrohre jeweils eines Oszillators eine Länge (I) aufweisen, wobei die Rohrmittelachsen der Messrohre des ersten Oszillators - bezogen auf die Basisebene des ersten Oszillators - bei der halben Rohrlänge (I/2) der Basisebene des zweiten Oszillators abgewandt sind, und wobei die Rohrmittelachsen der Messrohre des zweiten Oszillators - bezogen auf die Basisebene des zweiten Oszillators - bei der halben Rohrlänge (I/2) den Messrohren des ersten Oszillators zugewandt sind,
wobei der Strömungswiderstand in den Messrohren des zweiten Oszillators geringer ist als der Strömungswiderstand in den Messrohren des ersten Oszillators.

2. Coriolis-Massedurchflussmessgerät (100) nach Anspruch 1, wobei die Betriebsschaltung dazu eingerichtet ist, die Aktuatoranordnungen so zu treiben, dass die Biegeschwingungsnutzmoden des ersten bzw. zweiten Oszillators gleichzeitig angeregt werden.

3. Coriolis-Massedurchflussmessgerät (100) nach Anspruch 1, oder 2, wobei der erste und der zweite Oszillator dazu eingerichtet sind, jeweils den Biegeschwingungsnutzmoden überlagerte durch Corioliskräfte bedingte Auslenkungen, im folgenden "Coriolisauslenkungen", aufzuweisen, wenn die Messrohre von einem Massestrom durchsetzt sind, wobei die erste Sensoranordnung und die zweite Sensoranordnung jeweils mindestens zwei Sensorelemente aufweisen, um eine Phasenverschiebung zwischen dem jeweiligen Coriolisauslenkungen und dem zugehörigen Biegeschwingungsnutzmode zu erfassen.

4. Coriolis-Massedurchflussmessgerät (100) nach Anspruch 2 und 3, wobei die Betriebsschaltung dazu eingerichtet ist, in Abhängigkeit von der Phasenverschiebung der jeweiligen Coriolisauslenkung einen ersten Massedurchfluss (dm/dt_{_1}) durch die Messrohre des ersten Oszillators und einen zweiten Massedurchfluss (dm/dt_{_2}) durch die Messrohre des zweiten Oszillators zu ermitteln, und die Summe des ersten Massedurchflusses (dm/dt_{_1}) und des zweiten Massedurchflusses (dm/dt_{_2}) als Gesamtmassedurchfluss (dm/dt) auszugeben (dm/dt = dm/dt_{_1} + dm/dt_{_2}).

5. Coriolis-Massedurchflussmessgerät (100) nach einem der Ansprüche 1 bis 4, weiterhin umfassend ein Trägerrohr welches den einlassseitigen Sammler und den auslassseitigen Sammler starr mit einander verbindet.

6. Coriolis-Massedurchflussmessgerät (100) nach einem der Ansprüche 1 bis 5, wobei das erste Messrohr (110a) und das dritte Messrohr (110c) in einer gemeinsamen ersten Ebene und das zweite Messrohr (110b) und das vierte Messrohr (110d) in einer gemeinsamen zweiten Ebene liegen, wobei die erste Ebene und die zweite Ebene parallel zueinander verlaufen.

7. Coriolis-Massedurchflussmessgerät (100) nach einem der vorhergehenden Ansprüche, wobei sich der erste Oszillator in mindestens einer der folgenden Eigenschaften von dem zweiten Oszillator unterscheidet:
• Schwingfähige Länge der Messrohre
• Position der Knotenplatten
• Form der Knotenplatten.

8. Coriolis-Massedurchflussmessgerät (100) nach einem der vorhergehenden Ansprüche, wobei der Betrag der Differenz der Nutzmodeeigenfrequenzen der beiden Oszillatoren (|f₁₁ - f₁₂|) mindestens das 0,2-Fache und insbesondere mindestens das 0,4-Fache der Nutzmodeeigenfrequenz des ersten Oszillators beträgt.

## Claims

1. Coriolis mass flowmeter (100) with four measuring tubes (110a, 110b, 110c, 110d), particularly curved, at least a first actuator arrangement and a second actuator arrangement, at least a first sensor arrangement and a second sensor arrangement, wherein all four measuring tubes (110a, 110b, 110c, 110d) are connected in terms of flow to a collector (120) on the inlet side and outlet side, wherein the first measuring tube and the second measuring tube are connected to one another, on the inlet side and on the outlet side, with at least one rigid gusset plate arranged at a distance from the collector with the aim of forming a first oscillator, wherein the first actuator arrangement is designed to generate a flexural vibration useful mode between the two measuring tubes of the first oscillator,
wherein the third measuring tube and the fourth measuring tube are connected to one another, on the inlet side and on the outlet side, with at least one rigid gusset plate arranged at a distance from the collector with the aim of forming a second oscillator, wherein the second actuator arrangement is designed to generate a flexural vibration useful mode between the two measuring tubes of the second oscillator,
wherein the first sensor arrangement is configured to measure vibrations of the first oscillator, and
the second sensor arrangement is configured to measure vibrations of the second oscillator,
wherein the Coriolis mass flowmeter further comprises an operating circuit for driving the actuator arrangements and for recording the signals of the sensor arrangements,
**characterized in that**
the first oscillator has a flexural vibration useful mode with a first useful mode natural frequency (f₁₁),
and that the second oscillator has a flexural vibration useful mode with a second useful mode natural frequency (f₁₂),
wherein the first oscillator and the second oscillator can be mechanically excited independently of one another,
wherein the useful mode natural frequency of the second oscillator is greater than the useful mode natural frequency of the first oscillator,
wherein the value of the difference between the useful mode natural frequencies of the two oscillators (|f₁₁ - f₁₂|) is at least 0.1 times the useful mode natural frequency of the first oscillator,
wherein the operating circuit is designed to drive the actuator arrangements in such a way that the oscillators are each excited with their current useful mode natural frequency,
wherein, on account of the good quality of the oscillators, each oscillator is practically only excited at its own useful mode natural frequency,
wherein the measuring tubes each have a tube central axis, wherein points of intersection on the inlet side and the outlet side of the central axes of the measuring tubes of an oscillator define a base plane of the oscillator with the front surfaces of the measuring tubes, wherein the measuring tubes of an oscillator have a length (I), wherein the central tube axes of the measuring tubes of the first oscillator - in relation to the base plane of the first oscillator - are arranged to face away from the base plane of the second oscillator at the half pipe length (I/2), and wherein the central tube axes of the measuring tubes of the second oscillator - in relation to the base plane of the second oscillator - are arranged to face towards the measuring tubes of the first oscillator at the half pipe length (1/2),
wherein the flow resistance in the measuring tubes of the second oscillator is less than the flow resistance in the measuring tubes of the first oscillator.

2. Coriolis mass flowmeter (100) as claimed in Claim 1, wherein the operating circuit is designed to excite the actuator arrangements in such a way that the flexural vibration useful modes of the first or the second oscillator are excited at the same time.

3. Coriolis mass flowmeter (100) as claimed in Claim 1 or 2, wherein the first and the second oscillator are configured to present deflections, caused by Coriolis forces and superimposed on the flexural vibration useful modes, henceforth referred to as «Coriolis deflections», when a mass flow flows through the measuring tubes, wherein the first sensor arrangement and the second sensor arrangement each have at least two sensor elements in order to measure a phase shift between the individual Coriolis deflections and the associated flexural vibration useful mode.

4. Coriolis mass flowmeter (100) as claimed in Claims 2 and 3, wherein the operating circuit is designed to determine, as a function of the phase shift of the Coriolis deflection, a first mass flow (dm/dt_1) through the measuring tubes of the first oscillator and a second mass flow (dm/dt_2) through the measuring tubes of the second oscillator, and to output the sum of the first mass flow (dm/dt_1) and the second mass flow (dm/dt_2) as the total mass flow (dm/dt), with (dm/dt = dm/dt_1 + dm/dt_2).

5. Coriolis mass flowmeter (100) as claimed in one of the Claims 1 to 4, further comprising a carrier tube which rigidly connects the collector on the inlet side with the collector on the outlet side.

6. Coriolis mass flowmeter (100) as claimed in one of the Claims 1 to 5, wherein the first measuring tube (110a) and the third measuring tube (110c) are on a first common plane and the second measuring tube (110b) and the fourth measuring tube (110d) are on a second common plane, wherein the first plane and the second plane are parallel to one another.

7. Coriolis mass flowmeter (100) as claimed in one of the previous claims, wherein the first oscillator differs from the second oscillator with regard to at least one of the following properties:
• Oscillating length of the measuring tubes
• Position of the gusset plates
• Shape of the gusset plates.

8. Coriolis mass flowmeter (100) as claimed in one of the previous claims, wherein the value of the difference between the useful mode natural frequencies of the two oscillators (|f₁₁ - f₁₂|) corresponds to at least 0.2 times and particularly to at least 0.4 times the useful mode natural frequency of the first oscillator.

## Revendications

1. Débitmètre massique Coriolis (100) avec quatre tubes de mesure (110a, 110b, 110c, 110d), notamment coudés, au moins un premier circuit d'actionneur et un deuxième circuit d'actionneur, au moins un premier circuit de capteur et un deuxième circuit de capteur, tous les quatre tubes de mesure (110a, 110b, 110c, 110d) étant réunis en terme d'écoulement respectivement côté entrée et côté sortie à l'aide d'un collecteur (120),
le premier tube de mesure et le deuxième tube de mesure étant reliés entre eux, côté entrée et côté sortie, avec au moins un gousset rigide disposé à distance du collecteur, afin de former un premier oscillateur, le premier circuit d'actionneur étant conçu de telle sorte à générer un mode de vibration de flexion entre les deux tubes de mesure du premier oscillateur,
le troisième tube de mesure et le quatrième tube de mesure étant reliés entre eux, côté entrée et côté sortie, avec au moins un gousset rigide disposé à distance du collecteur, afin de former un deuxième oscillateur, le deuxième circuit d'actionneur étant conçu de telle sorte à générer un mode de vibration de flexion entre les deux tubes de mesure du deuxième oscillateur,
le premier circuit de capteur étant conçu de telle sorte à mesurer les vibrations du premier oscillateur, et
le deuxième circuit de capteur étant conçu de telle sorte à mesurer les vibrations du deuxième oscillateur,
le débitmètre massique Coriolis comprenant en outre un circuit d'exploitation destiné à l'excitation des circuits d'actionneur et à l'acquisition des signaux des circuits de capteur,
**caractérisé**
**en ce que** le premier oscillateur présente un mode de vibration de flexion avec une première fréquence propre de mode utile (f₁₁),
et **en ce que** le deuxième oscillateur présente un mode de vibration de flexion avec une deuxième fréquence propre de mode utile (f₁₂),
le premier oscillateur et le deuxième oscillateur pouvant être excités mécaniquement, indépendamment l'un de l'autre,
la fréquence propre de mode utile du deuxième oscillateur étant supérieure à la fréquence propre de mode utile du premier oscillateur,
le montant de la différence des fréquences propres de mode utile des deux oscillateurs (|f₁₁ - f₁₂|) correspondant à au moins 0,1 fois la fréquence propre de mode utile du premier oscillateur, le circuit d'exploitation étant conçu de telle sorte à exciter les circuits d'actionneur de telle sorte que les oscillateurs sont chacun excités avec leur fréquence propre de mode utile,
chacun des oscillateurs étant, en raison de la qualité élevée des oscillateurs, uniquement excités avec leur fréquence propre de mode utile,
les tubes de mesure présentant chacun un axe médian de tube, les points d'intersection, côté entrée et côté sortie, des axes médians des tubes de mesure d'un oscillateur définissant avec les surfaces frontales des tubes de mesure respectivement un plan de base de l'oscillateur, les tubes de mesure du premier oscillateur - par rapport au plan de base du premier oscillateur - étant disposés à l'opposé, à la demi-longueur de tube (I/2) du plan de base, du deuxième oscillateur, et les tubes de mesure du deuxième oscillateur - par rapport au plan de base du deuxième oscillateur - étant disposés en face, à la demi-longueur de tube (I/2) du plan de base, du premier oscillateur,
la résistance à l'écoulement dans les tubes de mesure du deuxième oscillateur étant inférieure à la résistance à l'écoulement dans les tubes de mesure du premier oscillateur.

2. Débitmètre massique Coriolis (100) selon la revendication 1, pour lequel le circuit d'exploitation est conçu de telle sorte à exciter les circuits d'actionneur de telle sorte que les modes utiles de vibration de flexion du premier ou du deuxième oscillateur sont excités en même temps.

3. Débitmètre massique Coriolis (100) selon la revendication 1 ou 2, pour lequel le premier et le deuxième oscillateur sont conçus de telle sorte à présenter des déviations dues aux forces de Coriolis, superposées aux modes utiles de vibration de flexion, appelées « déviations de Coriolis » ci-après, lorsque les tubes de mesure sont traversés par un débit massique, le premier circuit de capteur et le deuxième circuit de capteur présentant chacun au moins deux éléments de capteur, destinés à mesurer un déphasage entre les déviations de Coriolis respectives et le mode utile de vibration de flexion correspondant.

4. Débitmètre massique Coriolis (100) selon les revendications 2 et 3, pour lequel le circuit d'exploitation est conçu de telle sorte à déterminer, en fonction du déphasage de la déviation de Coriolis respective, un premier débit massique (dm/dt_1) à travers les tubes de mesure du premier oscillateur et un deuxième débit massique (dm/dt_2) à travers les tubes de mesure du deuxième oscillateur, et à afficher la somme du premier débit massique (dm/dt_1) et du deuxième débit massique (dm/dt_2) en tant que débit massique total (dm/dt), avec (dm/dt = dm/dt_1 + dm/dt_2).

5. Débitmètre massique Coriolis (100) selon l'une des revendications 1 à 4, comprenant en outre un tube-support, lequel relie entre eux le collecteur côté entrée et le collecteur côté sortie.

6. Débitmètre massique Coriolis (100) selon l'une des revendications 1 à 5, pour lequel le premier tube de mesure (110a) et le troisième tube de mesure (110c) sont dans un premier plan commun et le deuxième tube de mesure (110b) et le quatrième tube de mesure (110d) dans un second plan commun, le premier plan et le second plan étant parallèles l'un par rapport à l'autre.

7. Débitmètre massique Coriolis (100) selon l'une des revendications précédentes, pour lequel le premier oscillateur se distingue du deuxième oscillateur par au moins l'une des caractéristiques suivantes :
• Longueur apte à vibrer des tubes de mesure
• Position des goussets
• Forme des goussets.

8. Débitmètre massique Coriolis (100) selon l'une des revendications précédentes, pour lequel le montant de la différence des fréquences propre de mode utile des deux oscillateurs (|f₁₁ - f₁₂|) correspond à au moins 0,2 fois et notamment à au moins 0,4 fois la fréquence propre de mode utile du premier oscillateur.
